(19) Europäisches Patentamt
European Patent Office
Office européen des brevets

(11) **EP 2 842 189 B1**

(12) **EUROPEAN PATENT SPECIFICATION**

(45) Date of publication and mention
of the grant of the patent:
**29.08.2018 Bulletin 2018/35**

(21) Application number: **12725049.6**

(22) Date of filing: **24.04.2012**

(51) Int Cl.:
*H01M 8/04992* (2016.01)   *H01M 8/04089* (2016.01)
*H01M 8/0444* (2016.01)   *H01M 8/04537* (2016.01)

(86) International application number:
**PCT/FI2012/050405**

(87) International publication number:
**WO 2013/160520 (31.10.2013 Gazette 2013/44)**

(54) **CONTROL ARRANGEMENT AND METHOD FOR ADAPTING A FUEL CELL SYSTEM TO FUEL COMPOSITION**

STEUERANORDNUNG UND VERFAHREN ZUR ANPASSUNG EINES BRENNSTOFFZELLENSYSTEMS AN EINE BRENNSTOFFZUSAMMENSETZUNG

AGENCEMENT DE COMMANDE ET PROCÉDÉ POUR ADAPTER UN SYSTÈME DE PILE À COMBUSTIBLE À UNE COMPOSITION DE COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.03.2015 Bulletin 2015/10**

(73) Proprietor: **Convion Oy**
**02150 Espoo (FI)**

(72) Inventor: **ÅSTRÖM, Kim**
**FI-02460 Kirkkonummi (FI)**

(74) Representative: **Finnpatent Oy**
**Smart Chemistry Park**
**Raisionkaari 55**
**21200 Raisio (FI)**

(56) References cited:
**FR-A3- 2 906 647     JP-A- 1 246 771**
**JP-A- 2011 070 894**

## Description

### The field of the invention

Most of the energy of the world is produced by means of oil, coal, natural gas or nuclear power. All these production methods have their specific problems as far as, for example, availability and friendliness to environment are concerned. As far as the environment is concerned, especially oil and coal cause pollution when they are combusted. The problem with nuclear power is, at least, storage of used fuel.

Especially because of the environmental problems, new energy sources, more environmentally friendly and, for example, having a better efficiency than the above-mentioned energy sources, have been developed.

Fuel cell's, by means of which energy of fuel, for example biogas, is directly converted to electricity via a chemical reaction in an environmentally friendly process, are promising future energy conversion devices.

### The state of the art

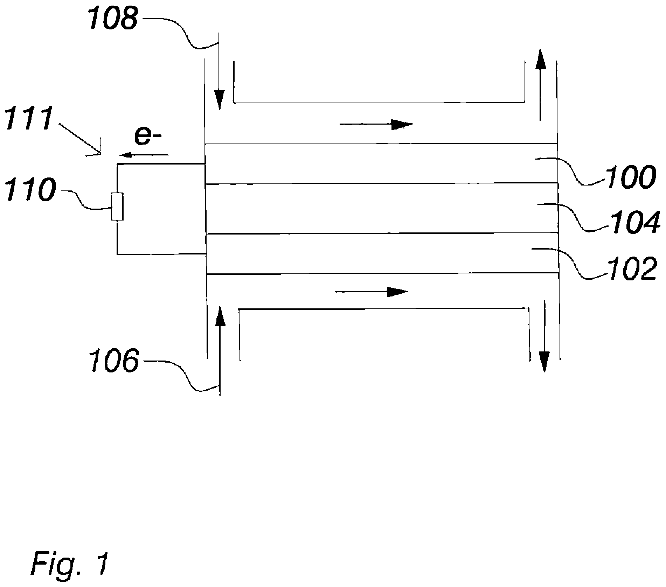

Fuel cell, as presented in fig 1, comprises an anode side 100 and a cathode side 102 and an electrolyte material 104 between them. In solid oxide fuel cells (SOFCs) oxygen 106 is fed to the cathode side 102 and it is reduced to a negative oxygen ion by receiving electrons from the cathode. The negative oxygen ion goes through the electrolyte material 104 to the anode side 100 where it reacts with fuel 108 producing water and also typically carbon dioxide ($CO_2$). Between anode 100 and cathode 102 is an external electric circuit 111 comprising a load 110 for the fuel cell.

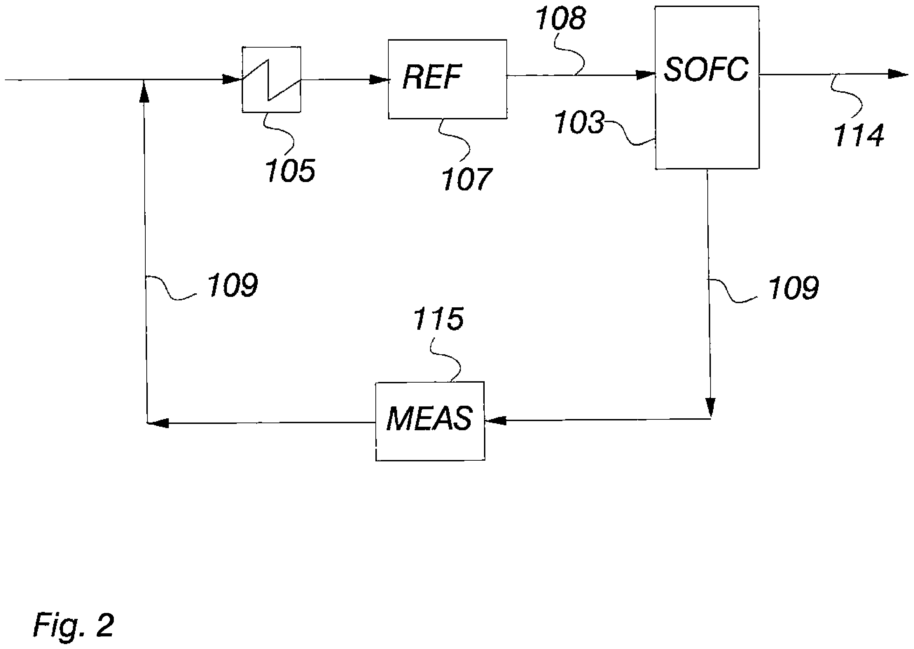

In figure 2 is presented a SOFC device as an example of a high temperature fuel cell device. SOFC device can utilize as fuel for example natural gas, bio gas, methanol or other compounds containing hydrocarbons. SOFC device in figure 2 comprises more than one, typically plural of fuel cells in stack formation 103 (SOFC stack). Each fuel cell comprises anode 100 and cathode 102 structure as presented in figure 1. Part of the used fuel can be recirculated in feedback arrangement 109 through each anode. SOFC device in fig 2 also comprises fuel heat exchanger 105 and reformer 107. Typically several heat exchangers are used for controlling thermal conditions at different locations in a fuel cell process. Reformer 107 is a device that converts the fuel such as for example natural gas to a composition suitable for fuel cells, for example to a composition containing hydrogen and methane, carbon dioxide, carbon monoxide and inert gases. Anyway in each SOFC device it is though not necessary to have a reformer.

By using measurement means 115 (such as fuel flow meter, current meter and temperature meter) necessary measurements are carried out for the operation of the SOFC device. Part of the gas used at anodes 100 may be recirculated through anodes in feedback arrangement 109 and the other part of the gas is exhausted 114 from the anodes 100.

A solid oxide fuel cell (SOFC) device is an electrochemical conversion device that produces electricity directly from oxidizing fuel. Advantages of SOFC device include high efficiencies, long term stability, low emissions, and cost. The main disadvantage is the high operating temperature which results in long start up and shutdown times and in both mechanical and chemical compatibility issues.

For example biogas applications provide an environment where fuel cells have a competitive advantage over competing technologies. In a properly designed fuel cell system low combustible content of the fuel gas can be compensated for by respectively increasing fuel flows with relatively limited negative impact on system cost and performance.

A prerequisite for achieving optimal performance with respect to system efficiency and lifetime is to accurately control the amount of fuel supplied to the system. Fuel feed has to be adjusted based on the fuel composition such that the fuel utilization (FU) is at a desired value. Operating at too high fuel utilization may give rise to local starvation in fuel cell stacks causing accelerated degradation. Too low fuel utilization in turn means reduced efficiency and increased risk of carbon formation (i.e. coking) in the system.

In most biogas fuel cell applications as well as in some natural gas fuel cell applications, the fuel composition can vary over time depending on a number of factors including ambient temperature and pressure, rate of consumption and seasonal variations. Change rates can range from fast changes (several percentage units per minute change, e.g. a step change in consumption) to slow changes such as for example seasonal variations.

In prior art document JP 2011 070894 A is presented a fuel cell system where the hydrogen feed to a low temperature fuel cell is adapted according to a difference between a predicted and measured cell voltage. JP 2011 070894 A does not present secondary means, independent of said predicted or measured voltage, and having longer time constant, for applying a tuning type superposed control over the voltage based on fuel prediction.

In order to operate a fuel cell system successfully, a mechanism for maintaining desired fuel utilization despite of fuel composition variations is required. Traditionally, this is accomplished using gas composition measurements based on which the correct amount of fuel feed is determined. However, most gas analyzing instruments and methods according to the invention are too unreliable, unpractical and/or expensive for being feasible for fuel cell system applications which have to fulfil reasonable economical requirements. Also, the prior art suffers from insufficient response time for fast transients.

## Short description of the invention

The object of the invention is to accomplish an advanced control arrangement for the fuel cell system, where existing measurement means can be utilized to provide necessary system process information. This is achieved by a control arrangement according to claim 1 for adapting a high temperature fuel cell system to fuel composition, each fuel cell in the fuel cell system comprising a cathode side, and an electrolyte between the anode side and the cathode side, and the fuel cell system comprises means for feeding fuel to the fuel cells and means for measuring fuel cell voltages to form measured cell voltage information. As a first control mechanism the control arrangement comprises means for determining assumed inlet fuel composition information, means for determining predicted cell voltage information, and means for determining a correction term to the assumed inlet fuel composition information based on the difference between said measured cell voltage information and said predicted cell voltage information, and the control arrangement comprises at least one superposed control mechanism to the first control mechanism for performing at least mainly tuning type control operations, which have a distinct time constant between control operations compared to the control operations of the first control mechanism, said tuning type control operations being performed for matching the assumed inlet fuel composition information to the real fuel composition during start-up or operation of the fuel cell system.

The focus of the invention is also a control according to claim 5 for adapting a fuel cell system to fuel composition, in which method is fed fuel to fuel cells and is measured fuel cell voltages to form measured cell voltage information. In the method is performed a first control mechanism to determine assumed inlet fuel composition information, to determine predicted cell voltage information, and to determine a correction term to the assumed inlet fuel composition information based on the difference between said measured cell voltage information and said predicted cell voltage information, and in the method is utilized at least one superposed control mechanism to the first control mechanism for performing at least mainly tuning type control operations, which have a distinct time constant between control operations compared to the control operations of the first control mechanism, said tuning type control operations being performed for matching the assumed inlet fuel composition information to the real fuel composition during start-up or operation of the fuel cell system.

The invention is based on accomplishing superposed control mechanisms comprising a first control mechanism for determining a correction term to an assumed inlet fuel composition information based on the difference between measured cell voltage information and predicted cell voltage information, and at least one superposed control mechanism to the first control mechanism having a distinct time constant between control operations compared to the control operations of the first control mechanism for matching the assumed inlet fuel composition information to the real fuel composition during start-up or operation of the fuel cell system.

The benefit of the invention is that fuel feed control is performed cost-effectively with a good adaptation of the fuel cell system.

## Short description of figures

Figure 1     presents a single fuel cell structure.

Figure 2     presents an example of a SOFC device.

Figure 3     presents a preferred embodiment according to the present invention.

## Detailed description of the invention

Solid oxide fuel cells (SOFCs) can have multiple geometries. The planar geometry (Fig 1) is the typical sandwich type geometry employed by most types of fuel cells, where the electrolyte 104 is sandwiched in between the electrodes, anode 100 and cathode 102. SOFCs can also be made in tubular geometries where for example either air or fuel is passed through the inside of the tube and the other gas is passed along the outside of the tube. This can be also arranged so that the gas used as fuel is passed through the inside of the tube and air is passed along the outside of the tube. Other geometries of SOFCs include modified planar cells (MPC or MPSOFC), where a wave-like structure replaces the traditional flat configuration of the planar cell. Such designs are promising, because they share the advantages of both planar cells (low resistance) and tubular cells.

The ceramics used in SOFCs do not become ionically active until they reach a very high temperature and as a consequence of this the stacks have to be heated at temperatures ranging from 600 to 1,000 °C. Reduction of oxygen 106 (Fig. 1) into oxygen ions occurs at the cathode 102. These ions can then be transferred through the solid oxide electrolyte 104 to the anode 100 where they can electrochemically oxidize the gas used as fuel 108. In this reaction, water and carbon dioxide byproducts are given off as well as two electrons. These electrons then flow through an external circuit 111 where they can be utilized. The cycle then repeats as those electrons enter the cathode material 102 again.

In large solid oxide fuel cell systems typical fuels are natural gas (mainly methane), different biogases (mainly nitrogen and/or carbon dioxide diluted methane), and other higher hydrocarbon containing fuels, including alcohols. Methane and higher hydrocarbons need to be reformed either in the reformer 107 (Fig 2) before entering the fuel cell stacks 103 or (partially) internally within the stacks 103. The reforming reactions require certain amount of water, and additional water is also needed to prevent possible carbon formation, i.e. coking caused by higher hydrocarbons. This water can be provided internally by circulating the anode gas exhaust flow, because water is produced in excess amounts in fuel cell reactions, and/or said water can be provided with an auxiliary water feed (e.g. direct fresh water feed or circulation of exhaust condensate). By anode recirculation arrangement also part of the unused fuel and dilutants in anode gas are fed back to the process, whereas in auxiliary water feed arrangement only additive to the process is water.

In embodiments according to the present invention is presented a calculation based method for controlling fuel feed in application with variable fuel composition without a separate need for a gas composition measurement. The method is based on three superposed controls affecting the fuel feed attempting to match the fuel cell voltage to a predicted value, matching system energy (i.e. enthalpy) balance and tuning a degradation parameter (area stack resistance, ASR) for the voltage prediction based on average performance. Once properly converged/tuned, the method provides quick response to composition transients and reasonable accuracy in fuel utilization. The invention also presents an approach for achieving safe operation and convergence following a start-up with unknown initial fuel composition and with unknown area stack resistance, ASR.

A compensation term for long term drift of gas analyzers can be derived for example by balancing the system enthalpies or afterburner power. This can drastically improve the accuracy of control based on less expensive gas analyzers having a tendency to drift over time. The stabilization time of such correction methods is, however, in the range of tens of minutes up to tens of hours before large thermal masses stabilize in temperature before reliable steady-state calculations can be made. Such slow response times are insufficient for controlling the system during fast transients in fuel composition. Therefore, these approaches do not completely eliminate the need for a gas composition measurement although they can release the requirements on its accuracy, long-term stability and hence, price.

The method is based on three superposed methods for estimating the fuel composition each with distinct time constants. The first and fastest mechanism provides a proportional correction term to the assumed fuel inlet composition based on the difference between measured fuel cell voltages and a predicted voltage. The predicted voltage may be derived from a real-time model, lookup-table or soft computing methodologies based on fuel cell operating parameters including current, temperatures, pressures and (assumed) compositions. A change in the voltage difference will give a rise to a proportional change in the assumed fuel composition counteracting the difference. Within the relevant operating range, there is a clear correlation between fuel utilization and fuel cell voltage. If the predicted voltage before a sudden fuel inlet composition change is accurate, i.e. corresponds to the actual fuel utilization, then keeping the voltage stable during the change by changing fuel feed amount is likely to result in an essentially constant fuel utilization. The response towards changes in fuel utilization in the fuel cell voltage is essentially immediate. Also, fuel feed can be changed rapidly, i.e. within seconds. As a consequence, the combination of voltage prediction methodology and substantially quick convergence can provide even excellent response in compensating effects of fast changes in inlet fuel composition.

Although the described voltage stabilizing control is effective in maintaining an essentially constant fuel utilization in short term operation and in transient situations it cannot alone account for systematic deviations between the predicted and actual stack performance. Such deviations may arise due to numerous factors including quality differences in stacks, inaccuracy and drift in measurements, thermal delays following load (thermal) transients and particularly stack degradation. If the fuel cell voltage is predicted wrong due to e.g. a clearly incorrect value for the state of degradation of the fuel cells, then attempting to achieve this voltage by changing assumed inlet composition and hence fuel feed would lead to drastic deviating fuel utilization from targeted values. In the embodiments according to the invention, this inherent unreliability of voltage prediction is however overcome by applying two superposed tuning mechanisms on top of the voltage based control. The tuning is based on the fact that most of the above stated factors causing systematic error in the predicted voltage are compensated by the voltage stabilizing control. Anyway thermal delays in load transients are error type effects that change only slowly in time caused for example by degradation. At constant fuel cell load and consequently essentially constant temperatures these errors can be assumed to cause an essentially fixed deviation between actual and predicted voltage in a reasonably wide fuel inlet composition range. Therefore, operating the system fuel feed based on voltage should be sufficiently accurate under the conditions given above when a proper offset term to correct for the deviation between predicted and actual voltage is in place.

As a system has reached thermal equilibrium, input and output energies (enthalpies) of the system should add up to zero. Such a balance calculation can be used to derive one unknown input or output. In this case, inlet enthalpies consist of fuel and air streams whereas outlets are electrical energy, exhaust heat and heat loss to surroundings. The electrical energy as well as the exhaust residual enthalpies can be measured fairly accurately as can also the air inlet feed and fuel inlet volume flow. Heat loss to surroundings is fairly constant for a high temperature fuel cell system. This leaves inlet fuel enthalpy, i.e. composition, as the only unknown which can be solved based on calculation when the system has reached steady state. On the basis of simulations the above described methodology can provide fairly accurate estimations for the inlet fuel composition, i.e. methane content error is 1-2%, and readily available and low-cost measurement means can be used to measure the other enthalpies to form enthalpy information needed in the embodiments according to the invention. In combination with the previously described voltage based control method, this energy balance method can be used to provide a correction term for the composition or predicted voltage such that the average enthalpy balance is zero. Such correction term to the voltage control will force the fuel utilization (FU) to be at the desired value on average.

If a reasonably long averaging time is used for the energy balance calculation then the correction term will be insensitive to short term transients in e.g. fuel inlet compensation. The response to such transients consequently relies on the voltage control, which as stated previously is well suited for this. The energy balance calculation hence provides a base value for the fuel inlet composition on top of which the voltage based compensation applies a correction term to compensate for transients. Alternatively to calculating a system enthalpy balance, the balance calculation can also be based for example on afterburner heat output, i.e. preferably on residual enthalpy change in the afterburner, or other quantity showing reasonably strong response to the inlet fuel composition.

The two methods above will combined provide a reasonably good control response in a fuel cell system where the predicted and actual stack performance is relatively well aligned. This applies for stacks whose characteristics are well known and subject to little change. However, over the lifetime of a fuel cell, its characteristics may change significantly as a result of degradation. Attempting to operate a significantly degraded fuel cell with a prediction valid for a non-degraded cell will lead to erroneous compensation of the assumed fuel composition as deviating performance is attempted to be corrected falsely by altering the assumed fuel composition. With the two methods described above, this will lead to conflicting compensations where voltage compensation attempts to correct the fuel combustible content downward, whereas the energy balance correction will attempt to counteract this erroneous compensation. It is thus preferably to apply limits for the compensation terms to avoid such a situation from escalating. This example however highlights that the described methodology for fuel feed control can be unreliable if degradation is not properly taken into account in the voltage prediction.

The effect of degradation on the behaviour of a fuel cell can reasonably well be represented by a change in the area specific resistance (ASR), i.e. ohmic loss, of the cell. Therefore, providing a predictive model with a correct ASR value should result in a fairly accurate voltage prediction. A deviation between a measured voltage and predicted voltage can thus be assumed to be primarily caused by a deviation in actual vs. assumed fuel utilization, whereby voltage based fuel composition compensation works as a means for controlling the fuel utilization. Combined with an energy balance calculation approach, the accuracy will be further improved as the average fuel utilization is then corrected to a desired value.

Actual degradation rate may vary between different fuel cell applications and systems depending on operating conditions, duty cycles, quality variations etc. Hence, a purely open-loop type approach for estimating the degradation is highly unreliable. Degradation can be quantified based on a voltage-current curve at known conditions. As the conditions upon system start-up are however, unknown with respect to fuel inlet composition, said approach cannot as such be applied in an application where no direct fuel inlet composition measurement means are available. However, taking into account that degradation is generally a very slowly evolving phenomenon, it can be deduced at run-time independent of other effects causing short-term variations in stack voltages. The suggested approach is to slowly modify the ASR input parameter used for stack voltage prediction such that the average difference between predicted and measured voltage is driven towards zero. This correction mechanism can operate with a clearly higher time constant than the energy balance calculation (e.g. weeks to months) to avoid instability between the two and to avoid a wrong FU from leading to erroneous ASR. This approach for determining the ASR can be combined with other approaches for deriving an ASR estimate e.g. to provide a good initial value for the ASR after a system start-up (with possibility of stacks damage having taken place during a thermal cycle). Such other approaches include open circuit voltage measurement, i.e. rough estimate to detect damaged/replaced stacks, run-time stack resistance measurements and/or stack leakage estimations based for example on temperature information and/or on afterburner power information.

Combining the three methods given above, the simplified algorithms for determining the input fuel composition are as follows:

$$xCH4_{in,assumed} = \text{Base value} + Gain1 * (U_{predicted}(ASR_n) - U_{measured}) + EB_n$$

$$EB_n = EB_{n-1} + Gain2 * (\Sigma(Enthaplies))$$

$$ASR_n = ASR_{n-1} + Gain3 * (U_{predicted}(ASR_{n-1}) - U_{measured})),$$

where the last control algorithm has the clearly longest time constant. Instead of purely proportional for the first control (Gain1) and purely integrating for the latter ones it is possible to apply for example a combination of proportional and integrating gains. Other approaches such as hysteresis control are also applicable.

In a transient operation method when a correct value is in place for the fuel cell ASR and the energy balancing has been given time to stabilize, the method provides a fast and reasonably accurate response to transients in fuel composition as well as for load transients in a limited range. The most challenging case for the use of the method is a system start-up where the initial ASR may be unknown and initial fuel composition is unknown. A number of approaches can be used to perform the initial tuning of the model.

In the determination of ASR can also be utilized neural network modelling. For example an ASR correction term can be accomplished by a semi adaptive neural network modelling. Also in a start up situation of the fuel cell system, an updated and adapted neural network model for the remaining stacks provides a relatively accurate start value for the ASR.

Depending on the expectable range of variation in the inlet fuel composition it is possible to define a fuel cell loading point below nominal load where it is possible to operate the system without risk of damage even without knowing the fuel composition. The "safe mode" operating point shall fulfil the following criteria: A) Fuel feed (or in other words FU) is sufficient even for the most diluted fuel. B) Coking conditions are avoided even for the most rich fuel. C) Afterburner maximum output power/temperature is not exceeded even for the most rich fuel.

The narrower the fuel variation range, the closer to the nominal current it is possible to operate without risk of coking if anode recirculation is kept at nominal (i.e. maximum). For example, for a relatively wide fuel methane content variation of 30-45%, it is possible to achieve approximately 60% of the nominal current with fuel utilization and O/C constraints fulfilled for a fixed inlet volume flow. The afterburner duty is most sensitive to too high fuel feed. In the example case, operation at actual 45% methane inlet composition with flow set according to a methane content of 30% would yield an afterburner power of approximately twice the nominal. Such a deviation is easily measurable and can be used to narrow down the potential range of possible fuel compositions.

In an embodiment according to the invention, the following approach is suggested for starting up a fuel cell system with an initial area specific resistance (ASR) in stacks and fuel composition being unknown: I Minimum and maximum values for fuel methane (or combustible content) are defined. Initially these are set to span the full range of fuel composition variation. II The system is brought up to a predefined safe mode loading point, for example 60% of nominal current, where fuel feed is controlled based on the minimum methane content of the fuel and coking prevention, i.e. anode side recirculation and possible water feed, is controlled based on the maximum methane content of the fuel. III The minimum fuel methane content (and hence fuel feed) is adjusted to maintain the afterburner close to its nominal (i.e. maximum) power. This corresponds to a relatively low fuel utilization (FU) as current is below nominal. At such low utilizations, the effect of FU on stack voltages is less pronounced, and ASR can be assessed even with uncertainty in the fuel composition. In practise, Gain3 can be increased during this tuning period. If the start-up is a continuation of previous runs with the same stack batch, then the old ASR value can directly be applied as starting value and there should be little need for tuning. IV As the system stabilizes, energy balance calculation can be initiated and applied separately for the upper and lower limits for the fuel composition causing them to converge towards a common value. In inverse proportion to narrowing down the composition range, the gain for the voltage based control (Gain1) is increased to provide transient response as operating margins are decreased. V The fuel cell current can be increased towards the nominal point as average composition uncertainty and/or uncertainty in ASR decreases. This increase can be gradual or triggered by the event when the uncertainty in the composition or uncertainty in ASR, i.e. deviation between predicted and measured voltage, drop below certain value(s).

In the embodiments according to the invention it is possible to safely start a fuel cell system without knowledge of the initial fuel composition and stack ASR. The larger the initial uncertainty in the two, the longer time the system will have to stabilize, i.e. spend in a safe mode before nominal operation can be achieved. In the most improved voltage prediction methodologies, i.e. to include dynamic effects, said stabilization time can be even substantially reduced. Even with a worst case stabilization time in the range of tens of hours, time is short compared to the typical stable operating period in a base load application according to the prior art. The invention is most optimally suited for applications where composition variations are relatively limited and most often slow drifted, but the invention can also be applied for more demanding cases although it may require operating with somewhat higher safety margins particularly with respect to coking to compensate for the inherent uncertainty factors.

In a preferred control method according to the present invention is adapted a fuel cell system to composition of fuel, which is fed to fuel cells 103. Anode 100 side recirculation flow 109 is performed for reactants. Fuel cell voltages are measured to form measured cell voltage information. A first control mechanism is performed to determine assumed inlet fuel composition information. Further in the first control mechanism is determined a predicted cell voltage information in a calculative process utilizing fuel cell system data and/or measurement information from the fuel cell system, and then is determined a correction term to the assumed inlet fuel composition information based on the difference between said measured cell voltage information and said predicted cell voltage information. In the preferred method are utilized two superposed control mechanisms 126, 128 to the first control mechanism, which compensates at least mainly transient type of voltage. Said two superposed control mechanisms to the first control mechanism are performing at least mainly tuning type control operations, which have a distinct time constant between control operations compared to the control operations of the first control mechanism. Said tuning type control operations are performed for matching the assumed inlet fuel composition information to the real fuel composition during start-up or during operation of the fuel cell system.

In at least one superposed control mechanism 126 of the preferred control method is determined fuel cell system enthalpy balance conditions, and in the at least one superposed control mechanism 128 is tuned a degradation parameter to determine predicted cell voltage information by the first control mechanism. Further in the preferred control method can be utilized at least one superposed control mechanism 126, 128 to the first control mechanism to narrow down confidence intervals, i.e. allowed ranges of values, for at least partially unknown fuel composition and at least partially unknown stack area specific resistance (ASR). This preferred embodiment of confidence intervals can be utilized at least in start up process of the fuel cell system by determining an allowed range of values to at least partially unknown fuel composition and/or at least partially unknown stack area specific resistance (ASR). In different control operations can be used different control values from said allowed range, preferably from both edges of the range. When operation of the fuel cell system becomes more stable and enthalpy balance is more reliable, the allowed range of values to the fuel composition can be controlled to be narrower. This controlling of width of the allowed range can be utilized, not only in start up process of the fuel cell system, but also during other operation process of the fuel cell system, the allowed range being narrower after a more stable operation of the fuel cell system.

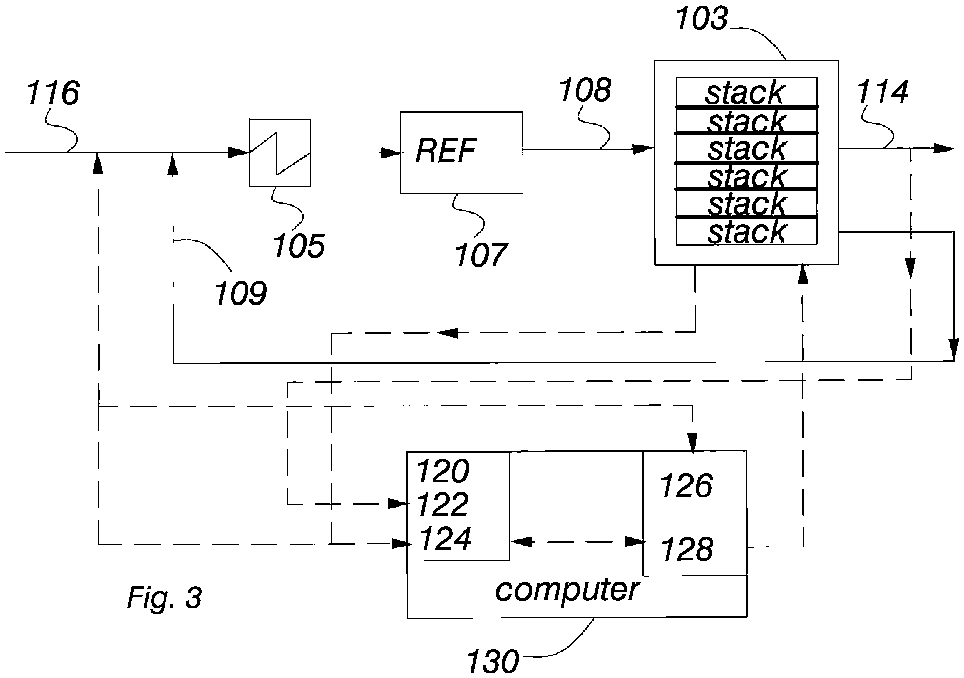

In figure 3 is presented a preferred control arrangement according to the present invention to implement the described preferred method for adapting a fuel cell system to fuel composition. The fuel cell system comprises means 116 for feeding fuel to the fuel cells 103 and means 109 for performing anode 100 side recirculation flow of reactants. The means 116 can be arranged for example by prior art fuel feed system comprising a fuel source and a pipe line through which fuel is fed into the fuel cell system. The means 109 are not necessary in implementing the arrangement and method according to the invention, i.e. the present invention can also be implemented and utilized in a fuel cell system, which does not comprise recirculation of the anode side 100 reactants. The fuel cell system also comprises means 115 for measuring fuel cell voltages to form measured cell voltage information. The preferred control arrangement comprises a first control mechanism which is implemented by means 120 for determining assumed inlet fuel composition information, means 122 for determining predicted cell voltage information, and means 124 for determining a correction term to the assumed inlet fuel composition information based on the difference between said measured cell voltage information and said predicted cell voltage information. The preferred control arrangement comprises a superposed control mechanism to the first control mechanism, which is implemented by means 126 for determining fuel cell system enthalpy balance conditions. The preferred control arrangement also comprises another superposed control mechanism to the first control mechanism, which is implemented by means 128 for tuning a degradation parameter to determine predicted cell voltage information by the first control mechanism.

As described related to figure 3, the preferred control arrangement comprises the two superposed control mechanisms 126, 128 to the first control mechanism, which compensates at least mainly transient type of voltage in this preferred embodiment. These two superposed control mechanisms 126, 128 to the first control mechanism are used for performing at least mainly tuning type control operations, which have a distinct time constant between control operations compared to the control operations of the first control mechanism. Said tuning type control operations are being performed for matching the assumed inlet fuel composition information to the real fuel composition during start-up or operation of the fuel cell system.

The means 120, 122, 124, 126 and 128 are preferably implemented by a calculative program used in at least one digital processor and the means 120, 122, 124, 126 and 128 can be located for example in a same computer 130 (Fig. 3), which comprises said at least one digital processor.
The means 115 for measuring fuel cell voltages to form measured cell voltage information are implemented for example by some prior art voltage measuring device.

In one preferred embodiment of the present invention the control arrangement comprises at least one superposed control mechanism 126, 128 to the first control mechanism to narrow down confidence intervals, i.e. allowed ranges of values, for at least partially unknown fuel composition and at least partially unknown stack area specific resistance (ASR). This preferred arrangement of confidence intervals can be utilized in start up process of the fuel cell system and also in other operation process of the fuel cell system to implement the above described preferred method of confidence intervals.

Also in one preferred embodiment different method combinations of the present invention can be also utilized to determine drift of mass flow meter, when fuel composition remains essentially same, or fuel composition and/or fuel flow velocity can be determined accurately enough.

Although the invention has been presented in reference to the attached figures and specification, the invention is by no means limited to those as the invention is subject to variations within the scope allowed for by the claims.

**Claims**

1. A control arrangement for adapting a high temperature fuel cell system to fuel composition, each fuel cell in the fuel cell system comprising an anode side (100), a cathode side (102), and an electrolyte (104) between the anode side and the cathode side, and the fuel cell system comprises means (115) for measuring fuel cell voltages to form measured cell voltage value and means (116) for feeding biogas type gas as fuel to the fuel cells (103), wherein as a first control mechanism the control arrangement comprises means (120) adapted to determine assumed inlet fuel chemical composition, means (122) adapted to determine predicted cell voltage value on the basis of one or more fuel cell operating parameter including current, temperature, pressure and the assumed inlet fuel chemical composition, and means (124) for determining a correction term to the assumed inlet fuel chemical composition based on the difference between said measured cell voltage value and said predicted cell voltage value, and the control arrangement comprises at least one further control mechanism (128) superposed to the first control mechanism for performing at least mainly tuning type control operations, which have longer time constant between control operations compared to the time constant of control operations of the first control mechanism, said tuning type control operations being performed for matching the assumed inlet fuel chemical composition to the real fuel chemical composition information during start-up or operation of the fuel cell system, and the superposed control mechanism comprises means (128) adapted to slowly modifying an area specific resistance (ASR) used by the first control mechanism for determining the predicted cell voltage value such that the average difference between predicted and measured voltage is driven towards zero.

2. A control arrangement for adapting a fuel cell system to fuel composition in accordance with claim 1, **characterized by**, that the fuel cell system comprises means (109) for performing anode (100) side recirculation flow of reactants.

3. A control arrangement for adapting a fuel cell system to fuel composition in accordance with claim 1, **characterized by**, that the control arrangement comprises two superposed control and tuning mechanisms (126, 128) to the first control mechanism, which compensates at least mainly transient type of voltage.

4. A control arrangement for adapting a fuel cell system to fuel composition in accordance with claim 3, **characterized by**, that the control arrangement comprises at least one superposed control or tuning mechanism (126, 128) to the first control mechanism to operate at narrower confidence intervals for at least partially unknown fuel composition and at least partially unknown stack area specific resistance (ASR).

5. A control method for adapting a high temperature fuel cell system to fuel composition, in which method is fed fuel to fuel cells (103), is measured fuel cell voltages to form measured cell voltage value and is fed biogas type gas as fuel to the fuel cells (103), wherein in the method is performed a first control mechanism to determine assumed inlet fuel chemical composition, to determine predicted cell voltage value on the basis of one or more fuel cell operating parameter including current, temperature, pressure and the assumed inlet fuel chemical composition, and to determine a correction term to the assumed inlet fuel chemical composition based on the difference between said measured cell voltage value and said predicted cell voltage value, and in the method is utilized at least one further control mechanism (128) superposed to the first control mechanism for performing at least mainly tuning type control operations, which have longer time constant between control operations compared to the time constant of control operations of the first control mechanism, said tuning type control operations being performed for matching the assumed inlet fuel chemical composition to the real fuel chemical composition information during start-up or operation of the fuel cell system, and in the at least one superposed control mechanism (128) is slowly modified an area specific resistance (ASR) used by the first control mechanism for determining the predicted cell voltage value such that the average difference between predicted and measured voltage is driven towards zero

6. A method in accordance with claim 5, **characterized by**, that in the method is performed anode (100) side recirculation flow of reactants.

7. A method in accordance with claims 5, **characterized by**, that in the method is utilized the two superposed control mechanisms (126, 128) to the first control mechanism, which compensates at least mainly transient type of voltage.

8. A method in accordance with claim 7, **characterized by**, that in the method is utilized at least one superposed control or tuning mechanism (126, 128) to the first control mechanism to operate at narrower confidence intervals for at least partially unknown fuel composition and at least partially unknown stack area specific resistance (ASR).

**Patentansprüche**

1. Steueranordnung zur Anpassung eines Hochtemperaturbrennstoffzellensystems an eine Brennstoffzusammensetzung, wobei jeder Brennstoffzelle in dem Brennstoffzellensystem eine Anodenseite (100), eine Kathodenseite (102), und ein Elektrolyt (104) zwischen der Anodenseite und der Kathodenseite umfasst, und das Brennstoffzellensystem Mittel (115) zum Messen von Brennstoffzellenspannungen umfasst, um einen gemessenen Zellenspannungswert zu bilden und Mittel (116), um den Brennstoffzellen (103) Biogas als Brennstoff zuzuführen, wobei die Steuervorrichtung als einen ersten Steuermechanismus Mittel (120) umfasst, die angepasst sind, eine angenommene chemische Zusammensetzung des Einlassbrennstoffs zu bestimmen, Mittel (122), die angepasst sind, einen vorhergesagten Zellenspannungswert auf Grundlage von einem oder mehreren Brennstoffzellenbetriebsparametern, einschließlich Strom, Temperatur, Druck und der angenommenen chemischen Zusammensetzung des Einlassbrennstoffs zu bestimmen, und Mittel (124) zum Bestimmen eines Korrekturterms für die angenommene chemische Zusammensetzung des Einlassbrennstoffs auf Grundlage der Differenz zwischen dem gemessenen Zellenspannungswert und dem vorhergesagten Zellenspannungswert, und die Steuervorrichtung mindestens einen weiteren Steuermechanismus (128) umfasst, der den ersten Steuermechanismus überlagert, um mindestens hauptsächlich Abstimmsteuervorgänge durchzuführen, welche im Vergleich zur Zeitkonstante von Steuervorgängen des ersten Steuermechanismus eine längere Zeitkonstante zwischen Steuervorgängen aufweisen, wobei die Abstimmsteuervorgänge durchgeführt werden, um die angenommene chemische Zusammensetzung des Einlassbrennstoffs mit der Information über die tatsächliche chemische Brennstoffzusammensetzung während des Startens oder Betriebs des Brennstoffzellensystems zu vergleichen, und der überlagerte Steuermechanismus Mittel (128) umfasst, die zum langsamen Modifizieren eines flächenspezifischen Widerstands (ASR), der von dem ersten Steuermechanismus zum Bestimmen des vorhergesagten Zellspannungswerts verwendet wird, angepasst sind, sodass die durchschnittliche Differenz zwischen vorhergesagter und gemessener Spannung gegen Null getrieben wird.

2. Steueranordnung zur Anpassung eines Brennstoffzellensystems an eine Brennstoffzusammensetzung nach Anspruch 1, **dadurch gekennzeichnet, dass** das Brennstoffzellensystem Mittel (109) zum Durchführen eines anodenseitigen (100) Rezirkulationsflusses von Reaktanten umfasst.

3. Steueranordnung zur Anpassung eines Brennstoffzellensystems an eine Brennstoffzusammensetzung nach Anspruch 1, **dadurch gekennzeichnet, dass** die Steueranordnung zwei Steuer- und Abstimmmechanismen (126, 128) umfasst, die dem ersten Steuermechanismus, welcher mindestens hauptsächlich transiente Spannungen kompensiert, überlagert sind.

4. Steueranordnung zur Anpassung eines Brennstoffzellensystem an eine Brennstoffzusammensetzung nach Anspruch 3, **dadurch gekennzeichnet, dass** die Steueranordnung mindestens einen Steuer- oder Abstimmungsmechanismus (126, 128) umfasst, der dem ersten Steuermechanismus überlagert ist, um bei mindestens teilweise unbekannter Brennstoffzusammensetzung und mindestens teilweise unbekanntem stapelflächenspezifischen Widerstand (ASR) bei engeren Konfidenzintervallen zu arbeiten.

5. Steuerverfahren zur Anpassung eines Hochtemperaturbrennstoffzellensystems an eine Brennstoffzusammensetzung, wobei in dem Verfahren Brennstoffzellen (103) Brennstoff zugeführt wird, Brennstoffzellenspannungen gemessen werden, um einen gemessenen Zellenspannungswert zu bilden und den Brennstoffzellen (103) Biogas als Brennstoff zugeführt wird, wobei in dem Verfahren ein erster Steuermechanismus durchgeführt wird, um eine angenommene chemische Zusammensetzung des Einlassbrennstoffs zu bestimmen, einen vorhergesagten Zellenspannungswert auf Grundlage von einem oder mehreren Brennstoffzellenbetriebsparametern, einschließlich Strom, Temperatur, Druck und der angenommenen chemischen Zusammensetzung des Einlassbrennstoffs zu bestimmen, und einen Korrekturterm für die angenommene chemische Zusammensetzung des Einlassbrennstoffs auf Grundlage der Differenz zwischen dem gemessenen Zellenspannungswert und dem vorhergesagten Zellenspannungswert zu bestimmen, und in dem Verfahren mindestens ein weiterer Steuermechanismus (128) verwendet wird, der den ersten Steuermechanismus überlagert, um mindestens hauptsächlich Abstimmsteuervorgänge durchzuführen, welche im Vergleich zur Zeitkonstante von Steuervorgängen des ersten Steuermechanismus eine längere Zeitkonstante zwischen Steuervorgängen aufweisen, wobei die Abstimmsteuervorgänge durchgeführt werden, um die angenommene chemische Zusammensetzung des Einlassbrennstoffs mit der Information zur tatsächlichen chemischen Brennstoffzusammensetzung während dem Starten oder Betrieb des Brennstoffzellensystems zu vergleichen, und in dem mindestens einen überlagerten Steuermechanismus (128) ein flächenspezifischer Widerstand (ASR), der von dem ersten Steuermechanismus zum Bestimmen des vorhergesagten Zellspannungswerts verwendet wird, langsam modifiziert wird, sodass die durchschnittliche Differenz zwischen vorhergesagter und gemessener Spannung gegen Null getrieben wird.

6.  Verfahren nach Anspruch 5, **dadurch gekennzeichnet, dass** in dem Verfahren ein anodenseitiger (100) Rezirkulationsfluss von Reaktanten durchgeführt wird.

7.  Verfahren nach Anspruch 5, **dadurch gekennzeichnet, dass** in dem Verfahren die zwei überlagerten Steuermechanismen (126, 128) für den ersten Steuermechanismus verwendet werden, welcher mindestens hauptsächlich transiente Spannung kompensiert.

8.  Verfahren nach Anspruch 7, **dadurch gekennzeichnet, dass** in dem Verfahren mindestens ein Steuer- oder Abstimmmechanismus (126, 128) verwendet wird, der dem ersten Steuermechanismus überlagert ist, um bei mindestens teilweise unbekannter Brennstoffzusammensetzung und mindestens teilweise unbekanntem stapelflächenspezifischen Widerstand (ASR) bei engeren Konfidenzintervallen zu arbeiten.

## Revendications

1.  Dispositif de commande pour l'adaptation d'un système de piles à combustible haute température à une composition de combustible, chaque pile à combustible dans le système de piles à combustible comprenant un côté anode (100), un côté cathode (102) et un électrolyte (104) entre le côté anode et le côté cathode, et le système de piles à combustible comprend un moyen (115) pour mesurer des tensions de pile à combustible afin de former une valeur de tension de pile mesurée, et un moyen (116) pour alimenter un gaz de type biogaz en tant que combustible vers les piles à combustible (103), dans lequel, en tant que premier mécanisme de commande, le dispositif de commande comprend un moyen (120) adapté pour déterminer une composition chimique de combustible d'entrée supposée, un moyen (122) adapté pour déterminer une valeur de tension de pile prévue sur la base d'un ou de plusieurs paramètres de fonctionnement de pile à combustible, y compris le courant, la température, la pression et la composition chimique de combustible d'entrée supposée, et un moyen (124) pour déterminer un terme de correction relatif à la composition chimique de combustible d'entrée supposée sur la base de la différence entre ladite valeur de tension de pile mesurée et ladite valeur de tension de pile prévue, et le dispositif de commande comprend au moins un mécanisme de commande supplémentaire (128) superposé au premier mécanisme de commande pour exécuter au moins des opérations de commande principalement de type réglage, lesquelles présentent une constante de temps plus longue entre des opérations de commande en comparaison avec la constante de temps d'opérations de commande du premier mécanisme de commande, lesdites opérations de commande de type réglage étant exécutées pour faire correspondre la composition chimique de combustible d'entrée supposée avec des informations de composition chimique de combustible réelle pendant le démarrage ou le fonctionnement du système de piles à combustible, et le mécanisme de commande superposé comprend un moyen (128) adapté pour modifier lentement une résistance spécifique à la zone (ASR) utilisée par le premier mécanisme de commande pour déterminer la valeur de tension de pile prévue de telle façon que la différence moyenne entre la tension prévue et la tension mesurée se rapproche de zéro.

2.  Dispositif de commande destiné à adapter un système de piles à combustible à une composition de combustible selon la revendication 1, **caractérisé en ce que** le système de piles à combustible comprend un moyen (109) pour créer un flux de recirculation de réactifs côté anode (100).

3.  Dispositif de commande destiné à adapter un système de piles à combustible à une composition de combustible selon la revendication 1, **caractérisé en ce que** le dispositif de commande comprend deux mécanismes de commande et de réglage (126, 128) superposés au premier mécanisme de commande, lesquels compensent une tension au moins principalement de type transitoire.

4.  Dispositif de commande destiné à adapter un système de piles à combustible à une composition de combustible selon la revendication 3, **caractérisé en ce que** le dispositif de commande comprend au moins un mécanisme de commande ou de réglage (126, 128) superposé au premier mécanisme de commande, pour opérer à des intervalles de confiance plus réduits pour une composition de combustible au moins partiellement inconnue et une résistance spécifique à la zone d'empilement (ASR) au moins partiellement inconnue.

5. Procédé de commande destiné à adapter un système de piles à combustible à une composition de combustible, dans lequel un combustible est alimenté vers des piles à combustible (103), des tensions de pile à combustible sont mesurées pour former une valeur de tension de pile mesurée et un gaz de type biogaz est alimenté en tant que combustible vers les piles à combustible (103), dans lequel un premier mécanisme de commande est actionné pour déterminer une composition chimique de combustible d'entrée supposée, pour déterminer une valeur de tension de pile prévue sur la base d'un ou de plusieurs paramètres de fonctionnement de pile à combustible, y compris le courant, la température, la pression et la composition chimique de combustible d'entrée supposée, et pour déterminer un terme de correction relatif à la composition chimique de combustible d'entrée supposée sur la base de la différence entre ladite valeur de tension de pile mesurée et ladite valeur de tension de pile prévue, et dans lequel au moins un mécanisme de commande supplémentaire (128) est superposé au premier mécanisme de commande pour effectuer au moins des opérations de commande principalement de type réglage, lesquelles présentent une constante de temps plus longue entre des opérations de commande en comparaison avec la constante de temps d'opérations de commande du premier mécanisme de commande, lesdites opérations de commande de type réglage étant exécutées pour faire correspondre la composition chimique de combustible d'entrée supposée avec des informations de composition chimique de pile réelle pendant le démarrage ou le fonctionnement du système de piles à combustible, et dans lequel l'au moins un mécanisme de commande superposé (128) est destiné à modifier lentement une résistance spécifique à la zone (ASR) utilisée par le premier mécanisme de commande pour déterminer la valeur de tension de pile prévue de telle façon que la différence moyenne entre la tension prévue et la tension mesurée se rapproche de zéro.

6. Procédé selon la revendication 5, **caractérisé en ce que** le procédé comprend la mise en place d'un flux de recirculation de réactifs côté anode (100).

7. Procédé selon la revendication 5, **caractérisé en ce que** le procédé comprend l'utilisation de deux mécanismes de commande (126, 128) superposés au premier mécanisme de commande, lesquelles compensent une tension de type au moins principalement transitoire.

8. Procédé selon la revendication 7, **caractérisé en ce que** le procédé comprend l'utilisation d'au moins un mécanisme de commande et de réglage (126, 128) superposé au premier mécanisme de commande, pour opérer à des intervalles de confiance réduits pour une composition de combustible au moins partiellement inconnue et une résistance spécifique à la zone d'empilement (ASR) au moins partiellement inconnue.

Fig. 1

Fig. 2

EP 2 842 189 B1

114

103

stack
stack
stack
stack
stack
stack

108

REF

107

105

109

116

126

128

120
122
124

computer

130

*Fig. 3*

**EP 2 842 189 B1**

**Patent documents cited in the description**

- JP 2011070894 A